# FASCICULE DE BREVET EUROPEEN

(11) **EP 1 463 166 B1**
(45) Date de publication et mention de la délivrance du brevet: **14.10.2015**
(21) Numéro de dépôt: 04101255.0
(22) Date de dépôt: 26.03.2004
(51) Int. Cl.: H02B 1/052

(54) **Dispositif de verrouillage bistable pour appareil électrique interrupteur**
Bistabile Verriegelungsvorrichtung für ein elektrisches Gerät
Bistable locking device for an electrical switching device

(30) Priorité: 27.03.2003 FR 0303973
(43) Date de publication de la demande: 29.09.2004
(73) Titulaire: Schneider Electric Industries SAS, 92500 Rueil-Malmaison (FR)
(72) Inventeur: Moreux, Alain, 21000, DIJON (FR)

(56) Documents cités:
- DE-A- 2 337 351
- DE-A- 3 922 551
- DE-A- 4 107 075

## Description

La présente invention se rapporte à un dispositif de verrouillage bistable permettant d'accrocher rapidement un appareil électrique interrupteur basse tension, en particulier un contacteur, un disjoncteur, un contacteur-disjoncteur ou autre, sur un support de montage. L'invention concerne également un appareil comportant un tel dispositif.

Il est connu que les appareils électriques interrupteurs comportent généralement sur leur face arrière un système d'accrochage destiné à pouvoir les fixer sur un support de montage, notamment àl'intérieur d'un coffret ou d'une armoire. Un tel système est souvent utilisé pour permettre un accrochage de l'appareil sur un rail de fixation profilé, tel qu'un rail DIN horizontal, de section en forme de chapeau présentant deux bords opposés et dont les dimensions de la section sont standards. Par rapport à un accrochage classique sur une platine àl'aide de vis de fixation, ce système présente l'avantage d'être plus souple et plus rapide de sorte que le montage des appareils est plus facilement mis en oeuvre par un utilisateur. Une fois accrochés, il est facile de raccorder électriquement les appareils.

Habituellement, le système d'accrochage d'un appareil interrupteur comporte une encoche ou une mâchoire d'accrochage disposée sur toute ou partie de la largeur de la face arrière de l'appareil et qui permet de coincer le bord supérieur du rail. Le système d'accrochage comporte également un verrou qui est susceptible de coincer le bord inférieur du rail de façon àpouvoir verrouiller l'appareil contre le rail. Ce verrou est amovible manuellement ou automatiquement grâce àdes moyens élastiques entre une position retirée, dans laquelle il libère le rail (position déverrouillée) et une position verrouillée, dans laquelle il immobilise l'appareil en venant pincer le bord inférieur du rail contre l'appareil (position verrouillée).

Pour fixer un appareil, un opérateur accroche d'abord la mâchoire de l'appareil contre le bord supérieur du rail puis actionne les moyens élastiques du système d'accrochage, par exemple à l'aide d'un outil ou directement par un plan incliné, pour pouvoir positionner librement l'appareil contre le bord inférieur du rail. Une fois l'appareil bien positionné, les moyens élastiques sont relâchés de manière à verrouiller complètement l'appareil contre le rail.

Cependant, un tel système d'accrochage ne possède qu'une position stable, correspondant à la position verrouillée. L'autre position, correspondant à la position déverrouillée, ne peut être obtenue que par une action maintenue de l'opérateur sur les moyens élastiques.

On veut parfois conserver la possibilité de déplacer librement plusieurs appareils le long du rail, après avoir positionné leur mâchoire sur le bord supérieur, avant de les fixer définitivement. Cela permet entre autres de régler facilement leur position précise les uns par rapport aux autres. Dans ce cas, un opérateur avec un seul outil pourra rencontrer des difficultés à positionner deux appareils ou plus l'un par rapport à l'autre, en étant obligé de maintenir simultanément les deux systèmes d'accrochage en position déverrouillée. Il s'ensuit une perte de temps durant le montage des appareils.

Il est donc intéressant de disposer d'un système possédant deux positions stables de façon àce que l'appareil puisse être déplacé librement sur le rail sans l'aide d'un outil avant d'être verrouillé. De telles solutions existent déjà notamment dans les documents DE3513762, DE4003408, DE4011446, FR2666482, EP0978913, DE2337351, DE20216516. Néanmoins, les systèmes présentés dans ces documents sont souvent destinés à des appareils de faible poids ou encombrement, tels que des appareils modulaires, et ils ne sont pas forcément adaptés à supporter de gros appareils interrupteurs.

Or, la présence d'un système bistable, bénéficiant d'une position verrouillée et d'une position déverrouillée stables, est encore plus intéressante dans le cas d'appareils interrupteurs de fort calibre, comme par exemple des appareils de protection et/ou de commande basse tension destinés à des moteurs de 100 kW ou plus, dont le poids peut rendre pénible le montage et le positionnement précis. De plus, on est parfois amené àfixer simultanément sur un même rail plusieurs gros appareils préalablement raccordés ensemble, en particulier dans le cas de deux contacteurs moteur précâblés en inverseurs. Il serait donc avantageux de concevoir un dispositif de verrouillage bistable économique et simple d'utilisation mais qui soit suffisamment fiable et robuste pour être capable de maintenir efficacement sur un rail tout appareil, en particulier des appareils de fort calibre.

Pour cela, l'invention décrit un dispositif de verrouillage d'un appareil électrique interrupteur sur un support de montage, comprenant un verrou mobile en translation selon un axe vertical entre une position déverrouillée stable dans laquelle l'appareil est déverrouillé du support de montage et une position verrouillée stable dans laquelle l'appareil est verrouillé par le verrou contre le support de montage. Le dispositif comporte un cliquet susceptible de pivoter selon un axe de basculement sensiblement perpendiculaire àl'axe de translation et muni de moyens de retenue qui coopèrent avec des moyens complémentaires agencés sur le verrou pour maintenir le dispositif en position déverrouillée. Le dispositif comporte également des moyens élastiques destinés à maintenir le dispositif en position verrouillée et dont une première extrémité prend appui contre le verrou et une seconde extrémité opposée prend appui contre le cliquet.

Selon une caractéristique, le cliquet comporte une languette actionnable depuis l'avant de l'appareil interrupteur, permettant de faire basculer le cliquet et de passer le dispositif en position verrouillée. Ainsi, l'action de verrouillage de l'appareil est extrêmement simple puisqu'elle consiste simplement à actionner cette languette du cliquet àpartir de l'avant de l'appareil. Selon une autre caractéristique le verrou présente un orifice permettant de mettre le dispositif en position déverrouillée, par exemple à l'aide d'un outil.

Grâce à l'invention, le verrou, le cliquet et les moyens élastiques sont des pièces distinctes qui peuvent ainsi être fabriquées aisément avec différents matériaux adaptés aux efforts de chacune. De plus, le verrou ne peut uniquement que coulisser selon un axe vertical. Contrairement à d'autres solutions, il n'a pas besoin de s'encliqueter ou de s'accrocher en effectuant un quelconque mouvement dans une autre direction, puisque c'est un cliquet séparé qui pivote pour maintenir le verrou en position déverrouillée. Cette caractéristique permet d'améliorer notablement la rigidité du verrou et donc le maintien de l'appareil en position verrouillée.

D'autres caractéristiques et avantages vont apparaître dans la description détaillée qui suit en se référant à un mode de réalisation donné à titre d'exemple et représenté par les figures annexées sur lesquelles :
- la figure 1 représente un schéma simplifié d'une vue éclatée en perspective d'un appareil interrupteur muni d'un dispositif de verrouillage conforme àl'invention,
- les figures 2 et 3 montrent le dispositif de verrouillage en coupe transversale, selon un plan vertical avant-arrière, respectivement en position verrouillée et déverrouillée,
- la figure 4 schématise une coupe horizontale d'un exemple de verrou.

En référence aux figures, un appareil électrique interrupteur comporte un boîtier 10 de forme approximativement parallélépipédique présentant une paroi arrière 12 avec une échancrure 13 destinée àrecevoir un support de montage 5 lui-même fixé par exemple dans un coffret, une armoire ou un châssis. Dans le mode de réalisation représenté, le support de montage 5 est un rail DIN sensiblement horizontal dont la section transversale a une forme connue de chapeau avec deux bords opposés. L'échancrure 13 présente sur sa partie supérieure un bec ou une mâchoire 11 dans laquelle vient se loger le bord supérieur du rail 5, de façon àposer l'appareil sur le rail de montage 5. Une fois l'appareil posé, un opérateur peut encore le déplacer le long du rail 5 notamment pour le positionner précisément. Puis, pour fixer l'appareil, il suffit ensuite de coincer le bord inférieur du rail 5 contre l'appareil à l'aide d'un dispositif de verrouillage, objet de l'invention.

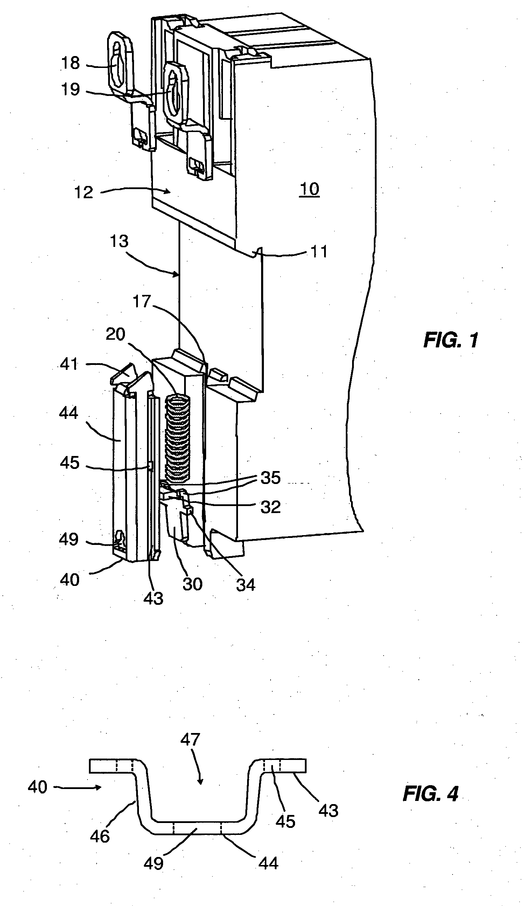

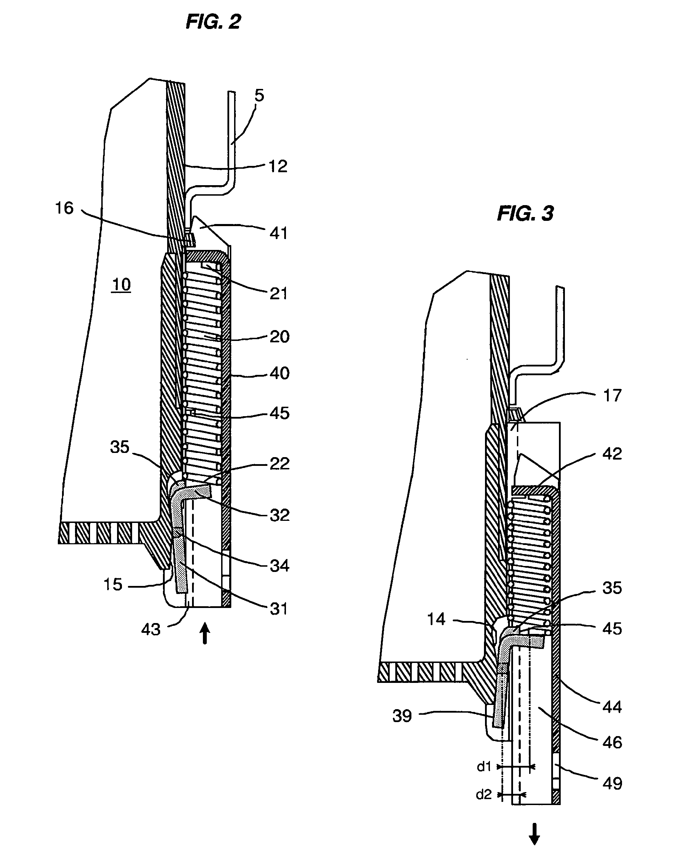

Le dispositif de verrouillage comprend un verrou 40 de forme allongée qui coulisse en translation selon un axe vertical et qui présente à son extrémité haute un nez 41. Le dispositif de verrouillage comporte deux positions stables : une position déverrouillée dans laquelle le nez 41 du verrou 40 s'efface du rail (figure 3) et une position verrouillée dans laquelle le nez 41 du verrou 40 vient coincer le bord inférieur du rail de montage 5 contre l'appareil interrupteur permettant ainsi de verrouiller celui-ci (figure 2). En référence àl'exemple de la figure 4, le verrou 40 est composé d'une partie médiane 44 verticale entourée de deux parties latérales 46 approximativement perpendiculaires à la partie médiane 44. Les parties latérales 46 sont elles-mêmes prolongées de chaque côté vers l'extérieur par des parois verticales formant des glissières 43 parallèles àla partie médiane 44.

Le nez du verrou 40 est composé, par exemple, de deux languettes transversales 41 situées dans le prolongement des parties latérales 46 et ayant chacune une face oblique qui vient en prise avec le bord inférieur du rail de montage 5 (voir figure 2) pour le coincer. Entre les deux languettes du nez 41, la partie médiane 44 du verrou 40 est par ailleurs prolongée par une face 42 sensiblement horizontale.

Les glissières verticales 43 permettent au verrou 40 de coulisser dans des rainures verticales correspondantes 17 aménagées dans la face arrière 12 du boîtier 10, au-dessous de l'échancrure 13, autorisant ainsi le déplacement du verrou uniquement selon l'axe vertical. Avantageusement, le verrou 40 ne nécessite aucune partie élastique qui servirait à faciliter son maintien dans une position donnée, par exemple par encliquetage ou autre. Il est alors simple de conception et facilement réalisable dans un matériau rigide tel que du métal, plus résistant que du plastique. Son seul degré de liberté par rapport à l'appareil est un mouvement vertical encadré par l'emboîtement des glissières 43 dans les rainures correspondantes 17. Il est donc suffisamment robuste et bien adapté pour maintenir contre un rail de montage des appareils électriques y compris de fort calibre.

Par ailleurs, la partie médiane 44 du verrou 40 possède un orifice 49 proche de son extrémité basse et susceptible notamment de recevoir un outil permettant à un opérateur de tirer aisément le verrou vers le bas afin de le mettre en position déverrouillée.

Le dispositif de verrouillage comporte également un cliquet 30 composé d'un bras principal 31 sensiblement perpendiculaire à un bras secondaire 32 formant ainsi une section transversale en forme de L renversé. Le cliquet 30 peut pivoter selon un axe de basculement horizontal matérialisé par deux dents 34 s'étendant vers l'extérieur, de chaque côté du bras principal 31. Ces dents 34 reposent dans des logements adaptés (non schématisés) agencés sur la face arrière 12 de l'appareil.

Le cliquet 30 peut ainsi basculer autour de cet axe 34 entre une position stable dite reculée (correspondant à la position verrouillée du dispositif - figure 2) et une position stable dite avancée (correspondant à la position déverrouillée du dispositif - figure 3). Le cliquet comprend des moyens de retenue 35 qui coopèrent avec des moyens complémentaires 45 agencés sur le verrou 40 permettant de maintenir le dispositif en position déverrouillée. Dans le mode de réalisation préféré, ces moyens de retenue sont constitués par deux ergots 35 débordant du bras principal 31 dans la même direction que le bras secondaire 32 et placés de part et d'autre du bras secondaire 32. Lorsque le cliquet est en position avancée, les ergots 35 s'introduisent dans deux crans d'accrochage correspondants 45, tels que des trous agencés dans les glissières 43 du verrou. Les crans 45 sont positionnés sur les glissières 43 à une hauteur telle que, lorsque les ergots 35 sont insérés dedans, le verrou 40 se trouve en position déverrouillée et est maintenu par le cliquet 30.

Quand le verrou 40 n'est pas en position déverrouillée, les extrémités des ergots 35 frottent contre les glissières 43, en dehors des crans 45, ce qui a pour effet de maintenir le cliquet en position reculée. Dans cette position reculée, le haut du bras principal 31 du cliquet 30 repose contre un plan incliné 14 aménagé àcet effet dans la face arrière 12 de l'appareil. Ce plan 14 est légèrement incliné vers le haut et est situé au-dessus de l'axe de basculement 34.

De même, en position avancée, le bas du bras principal 31 du cliquet 30 repose contre un plan incliné 15 aménagé à cet effet dans la face arrière 12 de l'appareil. Le plan 15 est légèrement incliné vers le bas et est situé au-dessous de l'axe de basculement 34. Le mouvement du cliquet 30 autour de l'axe de basculement 34 est donc limité entre ces deux plans inclinés 14,15. La position avancée est obtenue dès que les ergots 35 peuvent s'insérer dans les crans d'accrochage 45. Le cliquet 30 peut être sans difficulté réalisé en matière plastique moulée par exemple puisqu'il n'agit pas directement sur le rail de montage 5 et qu'il ne supporte donc pas directement les efforts de maintien de l'appareil sur le rail. Néanmoins, il peut aussi être métallique.

La partie médiane 44 et les deux parties latérales 46 du verrou 40 forment entre elles un espace 47 (voir figure 4) utilisé pour installer des moyens élastiques 20 qui exercent un effort selon l'axe vertical de déplacement du verrou 40. Préférentiellement ces moyens élastiques sont constitués par un ou plusieurs ressorts de compression hélicoïdaux 20 ordinaires et donc économiques. Le mode de réalisation présenté comporte un seul ressort de compression 20, mais on pourrait envisager de façon équivalente plusieurs ressorts de compression dans l'espace 47.

Le ressort de compression 20, placé dans l'espace 47, prend appui à une première de ses extrémités 21 contre la face 42 du verrou 40 et à une seconde extrémité opposée 22 contre le bras secondaire 32 du cliquet 30. Comme le cliquet 30 ne peut que pivoter selon l'axe de basculement horizontal 34, l'effort de pression vertical généré par le ressort 20 agit donc principalement sur le verrou 40.

Ainsi, grâce à la solution décrite dans l'invention, on peut modifier l'effort de pression que le dispositif de verrouillage doit exercer pour maintenir un appareil, sans modifier le cliquet 30 ni le verrou 40, mais simplement en jouant sur le type et/ou le nombre de ressorts 20. De cette façon, l'adaptation du dispositif àtoute une gamme d'appareils plus ou moins lourds et encombrants devient extrêmement facile.

Le fonctionnement du dispositif de verrouillage est le suivant :

Lorsque le dispositif est en position verrouillée (figure 2), le cliquet 30 est bloqué en position reculée contre le plan incliné 14 par les extrémités des ergots 35 qui reposent contre les glissières 43, mais qui n'empêchent pas le verrou de se déplacer. Le bras secondaire 32 du cliquet sert de base pour l'extrémité basse 22 du ressort 20. L'autre extrémité 21 du ressort appuie sur la face 42 et entraîne le verrou 40 vers le haut jusqu'àce que les dents 41 coincent le rail 5. Dans le cas où le rail 5 ne serait pas présent, une butée 16 est aménagée sur la face arrière 12 de l'appareil et contre laquelle la face 42 du verrou vient buter de façon àlimiter la course du ressort 20.

Pour passer de la position verrouillée à la position déverrouillée, un opérateur peut introduire un outil dans l'orifice 49 et tirer le verrou 40 vers le bas. Au moment où les ergots 35 vont venir en face des crans 45, le cliquet 30 va basculer en position avancée sous l'effet du ressort 20 qui appuie sur le bras secondaire 32 et les ergots 35 vont s'introduire dans les crans d'accrochage 45, bloquant ainsi le verrou 40 et stabilisant la position déverrouillée du dispositif de verrouillage.

En effet, cette position avancée du cliquet est stable car le dispositif selon l'invention est conçu pour que, par rapport àl'axe de basculement 34, le moment de la force de pression du ressort 20 exercée vers le bas sur le bras secondaire 32 soit supérieur au moment de la force de pression du ressort 20 exercée vers le haut sur les crans 45 du verrou 40. Cela provient du fait que la distance d1 (voir figure 3) entre l'axe de basculement 34 et le centre du bras secondaire 32 (considéré comme étant le point d'appui du ressort) est supérieure à la distance d2 entre l'axe de basculement 34 et le point d'appui des crans 45 sur les ergots 35. En conséquence, en dehors de toute intervention extérieure, le cliquet 30 est naturellement poussé contre le plan incliné 15 et donc stabilisé en position avancée.

Le bras principal 31 du cliquet 30 se prolonge au-delàde la face inférieure de l'appareil de façon à former une languette 39 qui est actionnable depuis l'avant de l'appareil. Pour passer de la position déverrouillée àla position verrouillée, un opérateur n'a simplement qu'à pousser cette languette 39 vers l'arrière par une action frontale, ce qui a pour effet de libérer les ergots 35 de leurs crans 45. Le verrou 40 est alors libéré et entraîné vers le haut sous l'action du ressort 20 vers la position verrouillée et le cliquet 30 bascule en position stable reculée. L'effort à fournir sur cette languette 39 pour libérer les ergots 35 est fonction de la distance entre l'axe de basculement 34 et le point de poussée sur la languette 39. Les dimensions du cliquet 30 sont évidemment conçues pour pouvoir le basculer avec un effort de poussée raisonnable sur la languette 39.

L'invention concerne également un appareil électrique interrupteur disposant d'un tel dispositif de verrouillage. Selon une caractéristique supplémentaire, certains appareils comportent en plus plusieurs orifices de fixation 18,19 (voir figure 1) destinés àpouvoir les fixer, par exemple àl'aide de vis, sur un autre type de support de montage, tel qu'une platine de montage. Ainsi, un même appareil peut être avantageusement monté soit sur un support de type platine, soit sur un support de type rail, en fonction de l'application voulue par l'utilisateur. Pour limiter le nombre de pièces dans un tel appareil, l'invention propose une solution économique consistant en ce que l'orifice 49 de la partie médiane 44 du verrou 40, servant initialement àtirer le verrou en position déverrouillée, ait une forme adaptée pour pouvoir en plus être utilisée comme un des orifices de fixation. L'exemple de la figure 1 montre ainsi un appareil qui pourrait aussi être fixé sur une platine de montage au moyen de deux orifices de fixation 18,19 rétractables positionnés près des coins supérieurs de l'appareil et au moyen de l'orifice 49 du verrou 40 dans la partie médiane basse de l'appareil.

Il est bien entendu que l'on peut, sans sortir du cadre de l'invention, imaginer d'autres variantes et perfectionnements de détail et de même envisager l'emploi de moyens équivalents.

## Revendications

1. Dispositif de verrouillage d'un appareil électrique interrupteur sur un support de montage (5), comprenant un verrou (40) mobile en translation selon un axe vertical entre une position déverrouillée stable dans laquelle l'appareil interrupteur est déverrouillé du support de montage (5) et une position verrouillée stable dans laquelle l'appareil interrupteur est verrouillé par le verrou (40) contre le support de montage (5), **caractérisé en ce que** le dispositif comporte :
• un cliquet (30) susceptible de pivoter selon un axe de basculement (34) sensiblement horizontal et comprenant des moyens de retenue (35) qui coopèrent avec des moyens complémentaires (45) agencés sur le verrou (40) pour maintenir le dispositif en position déverrouillée,
• des moyens élastiques (20) destinés à maintenir le dispositif en position verrouillée et dont une première extrémité (21) prend appui contre le verrou (40) et une seconde extrémité opposée (22) prend appui contre le cliquet (30).

2. Dispositif de verrouillage selon la revendication 1, **caractérisé en ce que** les moyens élastiques sont constitués par au moins un ressort de compression (20).

3. Dispositif de verrouillage selon la revendication 1 ou 2, **caractérisé en ce que** les moyens de retenue du cliquet comprennent deux ergots (35) susceptibles de s'insérer en position déverrouillée dans deux crans d'accrochage (45) correspondants agencés dans des parois verticales (43) du verrou (40).

4. Dispositif de verrouillage selon la revendication 3, **caractérisé en ce que**, lorsque le cliquet (30) n'est pas en position déverrouillée, l'extrémité des ergots (35) du cliquet reposent contre les parois verticales (43) du verrou (40).

5. Dispositif de verrouillage selon la revendication 3 ou 4, **caractérisé en ce que** le dispositif est agencé pour que, en position déverrouillée, le moment, appliqué par rapport à l'axe de basculement (34), de la force de pression exercée sur le cliquet (30) soit supérieur au moment de la force de pression exercée sur les crans d'accrochage (45) du verrou (40), permettant la stabilité de la position déverrouillée.

6. Dispositif de verrouillage selon l'une des revendications précédentes, **caractérisé en ce que** le cliquet (30) comporte une languette (39) actionnable depuis l'avant de l'appareil interrupteur, permettant un basculement du cliquet (30) et le passage du dispositif en position verrouillée.

7. Dispositif de verrouillage selon l'une des revendications précédentes, **caractérisé en ce que** le verrou (40) est en matériau métallique.

8. Dispositif de verrouillage selon l'une des revendications précédentes, **caractérisé en ce que** le cliquet (30) est en matériau plastique:

9. Dispositif de verrouillage selon l'une des revendications précédentes, **caractérisé en ce que** le verrou (40) présente un orifice (49) permettant d'actionner le dispositif en position déverrouillée.

10. Appareil électrique interrupteur, **caractérisé en ce qu'**il comporte au moins un dispositif de verrouillage selon l'une des revendications précédentes.

11. Appareil électrique interrupteur selon la revendication 10 comportant en outre plusieurs orifices (18,19) destinés à une fixation par vis sur un support de montage, **caractérisé en ce que** le verrou présente un orifice (49) qui permet d'actionner le verrou en position déverrouillée et qui est susceptible de faire office d'un desdits orifices de fixation(18,19,49).

## Patentansprüche

1. Vorrichtung zur Verriegelung eines elektrischen Schalters an einer Montagehalterung (5), die einen gemäß einer senkrechten Achse zwischen einer stabilen entriegelten Stellung, in der der Schalter von der Montagehalterung (5) entriegelt ist, und einer stabilen verriegelten Stellung translationsbeweglichen Riegel (40) enthält, in der der Schalter vom Riegel (40) gegen die Montagehalterung (5) verriegelt wird, **dadurch gekennzeichnet, dass** die Vorrichtung aufweist:
• eine Klinke (30), die gemäß einer im Wesentlichen waagrechten Kippachse (34) schwenken kann und Halteeinrichtungen (35) enthält, die mit auf dem Riegel (40) angeordneten komplementären Einrichtungen (45) zusammenwirken, um die Vorrichtung in der entriegelten Stellung zu halten,
• elastische Einrichtungen (20), die dazu bestimmt sind, die Vorrichtung in verriegelter Stellung zu halten, und von denen ein erstes Ende (21) gegen den Riegel (40) und ein zweites gegenüberliegendes Ende (22) gegen die Klinke (30) anliegt.

2. Verriegelungsvorrichtung nach Anspruch 1, **dadurch gekennzeichnet, dass** die elastischen Einrichtungen aus mindestens einer Druckfeder (20) bestehen.

3. Verriegelungsvorrichtung nach Anspruch 1 oder 2, **dadurch gekennzeichnet, dass** die Halteeinrichtungen der Klinke zwei Zapfen (35) enthalten, die sich in der entriegelten Stellung in zwei entsprechende Befestigungskerben (45) einfügen können, die in senkrechten Wänden (43) des Riegels (40) eingerichtet sind.

4. Verriegelungsvorrichtung nach Anspruch 3, **dadurch gekennzeichnet, dass**, wenn die Klinke (30) nicht in der entriegelten Stellung ist, das Ende der Zapfen (35) der Klinke gegen die senkrechten Wände (43) des Riegels (40) anliegt.

5. Verriegelungsvorrichtung nach Anspruch 3 oder 4, **dadurch gekennzeichnet, dass** die Vorrichtung eingerichtet ist, damit in der entriegelten Stellung das bezüglich der Kippachse (34) angelegte Moment der auf die Klinke (30) ausgeübten Druckkraft größer ist als das Moment der auf die Befestigungskerben (45) des Riegels (40) ausgeübten Druckkraft, was die Stabilität der entriegelten Stellung ermöglicht.

6. Verriegelungsvorrichtung nach einem der vorhergehenden Ansprüche,
**dadurch gekennzeichnet, dass** die Klinke (30) eine von der Vorderseite des Schalters betätigbare Zunge (39) aufweist, die ein Kippen der Klinke (30) und den Übergang der Vorrichtung in die verriegelte Stellung ermöglicht.

7. Verriegelungsvorrichtung nach einem der vorhergehenden Ansprüche,
**dadurch gekennzeichnet, dass** der Riegel (40) aus Metall ist.

8. Verriegelungsvorrichtung nach einem der vorhergehenden Ansprüche,
**dadurch gekennzeichnet, dass** die Klinke (30) aus Kunststoff ist.

9. Verriegelungsvorrichtung nach einem der vorhergehenden Ansprüche,
**dadurch gekennzeichnet, dass** der Riegel (40) eine Öffnung (49) aufweist, die die Betätigung der Vorrichtung in der entriegelten Stellung ermöglicht.

10. Elektrischer Schalter, **dadurch gekennzeichnet, dass** er mindestens eine Verriegelungsvorrichtung nach einem der vorhergehenden Ansprüche aufweist.

11. Elektrischer Schalter nach Anspruch 10, der außerdem mehrere Öffnungen (18, 19) aufweist, die für eine Schraubenbefestigung an einer Montagehalterung bestimmt sind, **dadurch gekennzeichnet, dass** der Riegel eine Öffnung (49) aufweist, die es ermöglicht, den Riegel in der entriegelten Stellung zu betätigen, und die als eine der Befestigungsöffnungen (18, 19, 49) dienen kann.

## Claims

1. Locking device for locking an electrical switching device on an assembly support (5), comprising a locking part (40) mobile in translation along a vertical axis between a stable released position in which the device is released from the assembly support (5), and a stable locked position in which the device is locked by the locking part (40) to the assembly support (5), **characterised in that** the device comprises:
- a latch (30) capable of pivoting about an approximately horizontal tilt axis (34) and provided with retaining means (35) that cooperate with complementary means (45) formed in the locking part (40) in order to hold the device in the released position,
- elastic means (20) designed to hold the device in the locked position, comprising a first end (21) leaning on the locking part (40) and a second opposite end (22) leaning on the latch (30).

2. Locking device according to claim 1, **characterised in that** the elastic means comprise at least one compression spring (20).

3. Locking device according to claim 1 or 2, **characterised in that** the latch retaining means comprise two pins (35) that, in the released position, will fit into two corresponding latching notches (45) formed in the vertical sides (43) of the locking part (40).

4. Locking device according to claim 3, **characterised in that**, when the latch (30) is not in the released position, the end of the pins (35) of the latch lay down with the vertical sides (43) of the locking part (40).

5. Locking device according to claim 3 or 4, **characterised in that** this device is arranged such that, in the released position, the moment of the pressure force, applied with regard to the tilt axis (34), exerted on the latch (30) is greater than the moment of the pressure force exerted on the latching notches (45) of the locking part (40), to keep the stability of the released position.

6. Locking device according to one of the preceding claims, **characterised in that** the latch (30) comprises a tab (39) that can be activated from the front of the switching device, to tilt the latch (30) and move it to the locked position.

7. Locking device according to one of the preceding claims, **characterised in that** the locking part (40) is made of metallic material.

8. Locking device according to one of the preceding claims, **characterised in that** the latch (30) is made of plastic material.

9. Locking device according to one of the preceding claims, **characterised in that** the locking part (40) comprises an opening (49) used to actuate the device in the released position.

10. Electrical switching device, **characterised in that** it comprises at least one locking device according to one of the preceding claims.

11. Electrical switching device according to claim 10, also comprising several openings (18, 19) intended for attachment of the switching device to an assembly support by screws, **characterised in that** the locking part (40) comprises an opening (49) used to actuate the locking part in the released position and that can be used as one of said attachment openings (18, 19, 49).
